# EUROPÄISCHE PATENTSCHRIFT

(11) **EP 4 069 532 B1**
(45) Veröffentlichungstag und Bekanntmachung des Hinweises auf die Patenterteilung: **17.01.2024**
(21) Anmeldenummer: 20815756.0
(22) Anmeldetag: 25.11.2020
(51) Int. Cl.: B60G 17/04, B60G 17/056, F16F 9/46, F16F 9/56

(54) **DRUCKMITTELVERSORGUNGSSYSTEM, INSBESONDERE FÜR EIN FAHRWERKSSYSTEM**
HYDRAULIC FLUID SUPPLY SYSTEM, IN PARTICULAR FOR A SUSPENSION SYSTEM
SYSTÈME D'ALIMENTATION EN FLUIDE HYDRAULIQUE, EN PARTICULIER POUR UN SYSTÈME DE SUSPENSION

(30) Priorität: 02.12.2019 DE 102019218699
(43) Veröffentlichungstag der Anmeldung: 12.10.2022
(73) Patentinhaber: ZF Friedrichshafen AG, 88046 Friedrichshafen (DE)
(72) Erfinder: RENN, Josef, 97337 Dettelbach (DE)
(86) Internationale Anmeldenummer: PCT/EP2020/083286
(87) Internationale Veröffentlichungsnummer: WO 2021/110499

(56) Entgegenhaltungen:
- EP-A1- 0 076 791
- WO-A1-92/00203
- DE-A1-102010 054 889
- DE-A1-102011 115 402
- DE-B3-102014 018 788
- DE-C1- 19 603 593
- DE-T5-112015 005 084

## Beschreibung

Die Erfindung betrifft ein Druckmittelversorgungssystem, insbesondere für eine Fahrzeugniveauregulierung gemäß dem Oberbegriff von Patentanspruch 1.

Aus der DE 103 53 025 A1 ist ein Druckmittelversorgungssystem bekannt, das eine Hydraulikpumpe umfasst, die zwei Förderrichtungen aufweist. Mit dem Druckmittelversorgungssystem ist ein Hydraulikzylinder als Bestandteil eines Federbeins verbunden. Der Hydraulikzylinder ist als ein einfach wirkender Zylinder gestaltet. Ein Dämpfelement als weiterer Bestandteil des Federbeins stellt eine in sich abgeschlossenen Baugruppe dar.

Eine Speichereinheit als Komponente des Druckmittelversorgungssystem umfasst einen Druckmittelvorrat, der permanent unter einer Mindestdruckvorspannung steht. Damit wird erreicht, dass die Leistungsaufnahme des Pumpenantriebs gegenüber einer Ausführung mit einem drucklosen Speicher geringer sein kann.

Die DE 102 13 156 A1 offenbart ein Druckmittelversorgungssystem, mit dem Druckmittel in einen Arbeitsraum eines Federbeins gefördert bzw. aus dem Druckmittel abgepumpt wird. In der DE 102 13 156 A1 wird nicht explizit beschrieben, ob ein Hydraulikmittelspeicher, mit dem eine reversierfähige Pumpe verbunden ist, unter einer Mindestdruckvorspannung steht. Es ist auch nicht offenbart, ob auch ein kolbenstangenseitiger Arbeitsraum mit Hydraulikmittel gefüllt ist. Grundsätzlich sind reversierfähige Pumpen aus der DE10 2014 018 788 B3 oder auch der DE 10 2010 0454 889 A1 bekannt.

Die DE 10 2017 216 441 B3 beschreibt ebenfalls ein Federbein in der Bauform eines Schwingungsdämpfers für eine Niveauregulierung. Das Druckmittelversorgungssystem verfügt über eine nur in eine Richtung fördernde Pumpe. Der Rücklauf des Druckmittels erfolgt über eine Rücklaufleitung in einen nicht vorgespannten Speicher. In der Ausführung nach Fig. 2 der DE 10 2017 216 441 B3 kommt ein mit Gas gefüllter Hüllkörper zur Anwendung, der den gesamten Druckmittelvorrat innerhalb des Federspeichers vorspannt. Bei einem Einsatz eines derartigen Hüllkörpers darf ein Mindestdruck im Federbein nicht unterschritten werden, da der Hüllkörper wegen eines zu geringen Gegendrucks im Druckmittelvorrat beschädigt werden könnte.

Die Aufgabe der vorliegenden Aufgabe ist es ein Druckmittelversorgungssystem zu schaffen, bei dem ein Federbein in Verbindung mit einem gasgefüllten Hüllkörper in Verbindung mit einer reversierfähigen Pumpe ohne Schadensrisiko für den Hüllkörper eingesetzt werden kann.

Die DE 11 2015 005 084 T5 offenbart ein Druckmittelversorgungssystem für ein Fahrzeugsystem mit einer Pumpe zur Versorgung eines Anschlusses für eine Luftfeder als anschließbares Stellelement. Ausgehend von der Pumpe ist funktional vor dem Anschluss ein Mindestdruckventil mit einem Steueranschluss für das anschließbare Stellelement angeordnet.

Ähnliche Bauformen sind aus der DE 10 2011 115 402 A1, DE 196 03 593 C2, WO 92/00203 A1 oder der EP 0 076 791 A1 bekannt.

Die Aufgabe wird durch die Merkmale des Patentanspruchs 1 gelöst.

Der Vorteil besteht darin, dass durch das Mindestdruckhalteventill ein angeschlossenes Stellelement stets eine Mindesttragkraft aufrechterhält. Bauteile, die unter einer Eigenspannung stehen und einen Mindestdruck im Stellelement benötigen, werden so vor einem Schadensfall geschützt.

Auch bei einer Förderung von Druckmittel wird erst dann eine Verbindung zwischen dem Anschluss und der Druckmittelversorgung freigegeben, wenn ein ausreichender Druck aufgebaut ist. Damit wird erreicht, dass das Mindestdruckhalteventil vollständig mit einer passiven Steuerung betrieben werden kann.

Gemäß einem vorteilhaften Unteranspruch sind der erste und der zweite Steueranschluss funktional miteinander verbunden. Damit erreicht, dass z. B. bei einem Anschluss, der nicht vollständig geschlossen ist und damit in einem Leitungsabschnitt zwischen dem Anschluss und dem Mindestdruckhalteventil kein Druck aufgebaut werden kann, maximal die Leckage im Volumenstrom der Steuerleitung auftritt. Der Arbeitsvolumenstrom der Pumpe bleibt in diesem Fall durch das Mindesthaltedruckventil gesperrt.

Im Hinblick auf einen optimierten Leistungseinsatz der Pumpe weist ein Druckmittelspeicher als Bestandteil des Druckmittelversorgungssystem eine Druckvorspannung oberhalb des Atmosphärendrucks auf. Damit muss die Pumpe nur noch den Zusatzdruck zwischen dem Momentandruck des Druckmittelspeichers und dem Druckniveaubedarf am Anschluss aufbringen.

Gemäß einem vorteilhaften Unteranspruch weist die Pumpe zwei Förderrichtungen auf und kann deshalb mit einem minimalen Ventilaufwand betrieben werden.

Funktional zwischen dem Mindestdruckhalteventil und der Pumpe ist ein Schaltventil angeordnet, wobei eine Versorgungsleitung zwischen dem Schaltventil und dem Druckmittelspeicher funktional parallel zu der Pumpenauslassleitung verläuft. Damit kann die Laufzeit der Pumpe minimiert werden. Der Energieeinsatz für das Schaltventils ist im Vergleich zum Energieeinsatz für die Pumpe vernachlässigbar.

Des Weiteren ist vorteilhafterweise vorgesehen, dass eine Saugleitung der Pumpe und die Versorgungsleitung voneinander getrennt sind. Damit wird mit einfachen Mitteln ein hydraulischer Kurzschluss innerhalb des Druckmittelversorgungssystems verhindert.

Ein weiterer Vorteil des Einsatzes des Schaltventils besteht darin, dass bei einer Förderung von Druckmittel aus dem Druckmittelspeicher über die Pumpenauslassleitung das Schaltventil die Versorgungsleitung sperrt. Es liegt somit eine klare Trennung der Druckmittelversorgung für den Anschluss vor.

Dazu kann auch gehören, dass bei einer über das Schaltventil eingestellten Verbindung über die Versorgungsleitung zwischen dem Anschluss und dem Druckmittelspeicher die Pumpenauslassleitung gesperrt ist.

Bevorzugt ist an dem Anschluss ein Stellelement mit einem zum Druckmittelspeicher separaten Speicher angeschlossen, der für die Druckvorspannung einen Hüllkörper mit einer eingeschlossenen Gasmasse aufweist.

Anhand der folgenden Figurenbeschreibung soll die Erfindung näher erläutert werden:
Es zeigt:
Fig. 1 Ersatzschaubild eines nicht erfindungsgemäßes Druckmittelversorgungssystem
Fig. 2 Erweitertes und erfindungsgemäßes Druckmittelversorgungssystem basierend auf Fig. 1

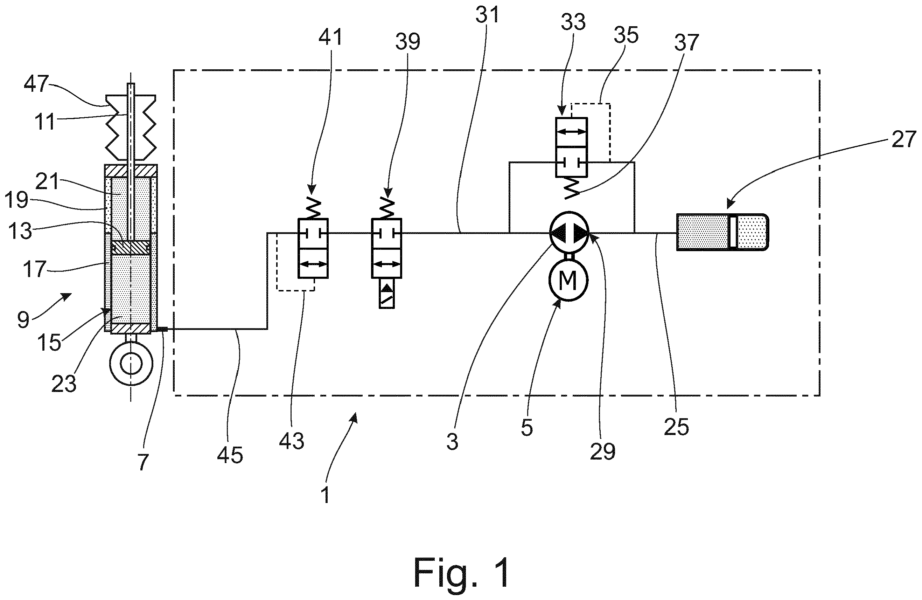

Die Fig. 1 zeigt ein Ersatzschaubild eines Druckmittelversorgungssystems 1, insbesondere für ein Fahrwerkssystem. Ein derartiges Druckmittelversorgungssystem ist beispielsweise für eine Niveauregulierung bei einem PKW, einem Nutzfahrzeug oder auch einem Zweirad anwendbar. Denkbar ist auch der Einsatz bei einer Kabinenlagerung eines NKW oder einer Arbeitsmaschine.

Das Druckmittelversorgungssystem 1 umfassend eine Pumpe 3 mit einem Pumpenantrieb 5 zur Versorgung eines Anschlusses 7. Dieser Anschluss 7 ist mit einem Stellelement 9, z. B. einem Federbein verbunden. Bei dem dargestellten Stellelement 9 handelt es sich bevorzugt um einen Schwingungsdämpfer mit einer Kolbenstange 11 und einem Kolben 13, die axial beweglich in einem Zylinder 15 geführt sind. Zur Kompensation des von der Kolbenstange 11 verdrängten Dämpfmediums innerhalb des Zylinders 15 verfügt das Stellelement 9 über einen Ausgleichsraum 17, in dem in einem Hüllkörper 19 eine unter Druckstehende Gasmasse angeordnet ist. Ein derartiger Hüllkörper ist beispielsweise aus der DE 10 2015 209 562 A1 oder der DE 10 2016 207 628 A1 bekannt. Bei einer Ausfahrbewegung der Kolbenstange 3 aus dem Zylinder vergrößert sich aufgrund der Wirkung des internen Gasdrucks das Volumen des Hüllkörpers 19, so dass ein kolbenstangenseitiger und ein kolbenstangenferner Arbeitsraum 21; 23 stets mit einem Druckmedium gefüllt sind. Das Druckniveau innerhalb des Hüllkörpers 19 und das Druckniveau des Druckmediums im Ausgleichsraum 17 sind identisch, so dass der Hüllkörper praktisch keine nennenswerte Belastung aufweist.

Die Pumpe 3 ist über eine Saugleitung 25 mit einem Druckmittelspeicher 27 verbunden, der eine Druckvorspannung oberhalb des Atmosphärendrucks aufweist. Die Druckvorspannung innerhalb des Druckmittelspeichers 27 richtet sich nach der Traglast des Stellelements 9. Eine sinnvolle Druckvorspannung könnte sich danach richten, dass das Stellelement 9 eine definierte Traglast auf einer definierten Niveaulage hält und dabei das Druckniveau im Druckmittelspeicher 27 dem Druckmittelniveau im Stellelement 9 entspricht.

Die Pumpe 3 weist zwei Förderrichtungen auf, so dass allein mit der Ansteuerung der Pumpe 3 eine Stellbewegung des Stellelements 9 in beide Verstellrichtungen möglich ist.

Zwischen der Saugleitung 25, die sich zwischen dem Druckmittelspeicher 27 und einem Sauganschluss 29 der Pumpe 3 und einer Pumpenauslassleitung 31 ist ein Überdruckventil 33 angeordnet, dass eine Anbindung einer Steuerleitung 35 mit der Saugleitung 25 aufweist. Das Überdruckventil 33 nimmt durch eine Federvorlast 37 eine Sperrstellung ein und wird bei Bedarf durch den Druck in der Steuerleitung 35 in eine Durchlassstellung überführt. Dadurch wird verhindert, dass durch eine fehlerhafte Ansteuerung der Pumpe 3 das Druckniveau im Druckmittelspeicher 27 einen oberen Grenzwert überschreitet.

Zwischen dem Anschluss 7 und der Pumpe 3 kann ein Schaltventil 39 angeordnet sein, mit dem die Druckmittelzufuhr aber auch der Rückfluss vom Anschluss 7 in Richtung des Druckmittelspeichers 27 gesteuert wird. In der einfachsten Ausführung genügt ein einfaches 2/2-Wegeventil, das nur eine Durchlass- und eine Blockierstellung aufweist. Grundsätzlich könnte man auf das Schaltventil 39 verzichten, doch dann sollte die Pumpe 3 in beide Strömungsrichtungen vom Anschluss 7 zum Druckmittelspeicher 27 und umgekehrt nur eine interne minimale Leckage aufweisen. Mit dem Schaltventil 39 wird der mögliche Einfluss einer internen Leckage ausgeschaltet.

Des Weiteren ist ausgehend von der Pumpe 3 funktional vor dem Anschluss 7 ein Mindestdruckhalteventil 41 mit einem Steueranschluss 43 für das anschließbare Stellelement 9 angeordnet ist. Der Steueranschluss 43 ist mit einer Anschlussleitung 45 verbunden, die u. a. sich zwischen dem Anschluss 7 und dem Mindestdruckhalteventil 41 und weiter bis zum Schaltventil 39 erstreckt. In der Ausgangsstellung des Mindestdruckhalteventils 41 sorgt eine Stellkraft für die Einnahme einer Blockierstellung des Ventils. Erst von in der Anschlussleitung 45 und damit in dem Steueranschluss 43 ein ausreichend hoher Druck aufgebaut wird, z. B. durch den Momentandruck des Stellelements 9 am Anschluss 7, wird entgegen der Stellkraft eine Druckkraft aufgebaut, die das Mindestdruckhalteventil 41 in die Durchlassstellung bewegt. Bevorzugt verfügt das Mindestdruckhalteventil 41 nur über diese beiden Schaltstellungen.

Beim Betrieb des Druckmittelversorgungssystems 1 wird Druckmittel bedarfsgerecht zwischen dem Stellelement 9 und dem Druckmittelspeicher 27 umgepumpt. Bedingt durch die zwei Förderrichtungen der Pumpe 3 kann auch eine Einfahrbewegung der Kolbenstange 11 zusätzlich zur Verdrängerleistung aufgrund einer auf das Stellelement 9 wirkenden Tragkraft von der Pumpe 3 unterstützt werden. Es kann jedoch der Fall auftreten, dass die Einfahrbewegung der Kolbenstange 11 in den Zylinder 15 z. B. mechanisch blockiert wird. Bildlich ist dieser Fall in der Fig. 1 beispielhaft dadurch dargestellt, dass eine äußere Anschlagfeder 47 ihre Blocklänge erreicht. Die Pumpe 3 könnte weiterhin Druckmittel aus dem Stellelement 9 absaugen. Der kolbenstangenferne Arbeitsraum 23 und der Ausgleichsraum 17 im Stellelement 9 sind miteinander hydraulisch verbunden. Es wäre zu befürchten, dass der Druck im Ausgleichsraum 17 im Verhältnis zum vorgefüllten Druckniveau der in dem Hüllkörper 19 eingeschlossene Gasmasse ein zu geringes Druckniveau erreicht. Dann wäre der Hüllkörper 19 mechanisch stark belastet.

Das Mindestdruckhalteventil 41 verhindert diesen Zustand, indem es bei Unterschreiten einen Grenzdrucks innerhalb des Steueranschlusses 43 in die Blockierstellung übergeht.

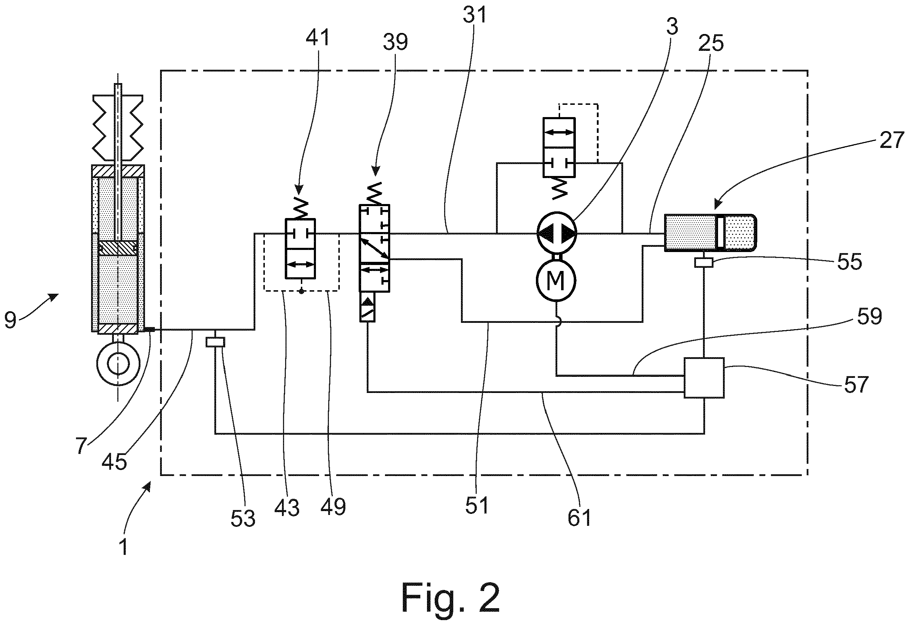

Basierend auf dem Druckmittelversorgungssystem nach Fig. 1 weist das Mindestdruckhalteventil 41 nach Fig. 2 einen zweiten Steueranschluss 49 an die Pumpenauslassleitung 31 des Druckmittelversorgungssystems 1 auf. Zudem sind der erste und der zweite Steueranschluss 43; 49 funktional miteinander verbunden. Dieses kombinierte Bauprinzip ist keinesfalls zwingend. Dadurch wird erreicht, dass dann, wenn das Mindestdruckhalteventil 41 aufgrund einer Minimaldruckgrenze innerhalb des Steueranschlusses 41 in die Blockierstellung übergeht, bei einer Förderung von Druckmittel ausgehend von dem Druckmittelspeicher 27 oder der Pumpe 3 wieder in die Durchlassstellung gebracht werden kann, ohne dass man z. B. das Stellelement 9 mit einer Zusatzmasse auflastet. Andererseits kann sich innerhalb der beiden verbundenen Steueranschlüsse 43; 49 nur dann ein ausreichendes Druckniveau aufbauen, wenn der Anschluss 7 auch bestimmungsgemäß an ein Stellelement oder ein anderes Aggregat mit einem entsprechenden Gegendruck angeschlossen ist.

Abweichend zur Ausgestaltung nach der Fig. 1 ist das Schaltventil 39 in seiner Funktionalität und den Anschlüssen erweitert. Bei dem Schaltventil 39 gemäß Fig. 2 handelt es sich um 3/3-Wegeventil, das ebenfalls funktional zwischen dem Mindestdruckhalteventil 41 und der Pumpe 3angeordnet ist, wobei jedoch eine Versorgungsleitung 51 zwischen dem Schaltventil 39 und dem Druckmittelspeicher 27 funktional parallel zu der Pumpenauslassleitung 31 verläuft. Damit wird erreicht, dass in Abhängigkeit der Druckniveaus im Stellelement 9 und im Druckmittelspeicher 27 Verstellbewegungen des Stellelements 9 ohne aktive Pumpenarbeit allein aufgrund der Ausnutzung des momentanen Druckgefälles zwischen dem Stellelement 9 und dem Druckmittelspeicher 27 möglich sind.

Dazu werden ggf. das Druckniveau in der Anschlussleitung 45 und im Druckmittelspeicher 27, z. B in der Saugleitung 25 über Sensoren 53; 55 erfasst und einer Rechnereinheit 57 zugeführt. Steuerleitungen 59; 61 verbinden die Rechnereinheit 57 mit der Pumpe 3 und dem Schaltventil 39.

Auch die Saugleitung 25 der Pumpe 3 und die Versorgungsleitung 51 sind voneinander getrennt. Damit kann die Druckmittelversorgung vom Druckmittelspeicher 27 bis zum Schaltventil 39 vollständig parallel zur Pumpe 3 erfolgen.

In einer ersten Schaltstellung, die die Ausgangsstellung des Schaltventils 39 darstellt, sind die Pumpenauslassleitung 31, die Versorgungsleitung 51 und die Anschlussleitung 45 zwischen dem Schaltventil 39 und dem Mindestdruckhalteventil 41 blockiert.

In einer zweiten Schaltstellung des Schaltventils 39 liegt eine richtungsunabhängig durchströmbare Versorgungsleitung 51 vor. Die Pumpenauslassleitung 31 ist blockiert.

Bei einer dritten Schaltstellung des Schaltventils 39 ist die Versorgungsleitung 51 bei einer Förderung von Druckmittel aus dem Druckmittelspeicher 27 über die Pumpenauslassleitung 31 sperrt.

Damit ist stets eine strikte Trennung der Druckmittelversorgung des Stellelements 9 entweder über die Pumpe 3 oder direkt über die Versorgungsleitung 51 einstellbar.

### Bezugszeichen

| | | | |
|---|---|---|---|
| 1 | Druckmittelversorgungssystem | 61 | Steuerleitung |
| 3 | Pumpe | | |
| 5 | Pumpenantrieb | | |
| 7 | Anschluss | | |
| 9 | Stelleelement | | |
| 11 | Kolbenstange | | |
| 13 | Kolben | | |
| 15 | Zylinder | | |
| 17 | Ausgleichsraum | | |
| 19 | Hüllkörper | | |
| 21 | kolbenstangenseitiger Arbeitsraum | | |
| 23 | kolbenstangenferner Arbeitsraum | | |
| 25 | Saugleitung | | |
| 27 | Druckmittelspeicher | | |
| 29 | Sauganschluss | | |
| 31 | Pumpenauslassleitung | | |
| 33 | Überdruckventil | | |
| 35 | Steuerleitung | | |
| 37 | Federvorlast | | |
| 39 | Schaltventil | | |
| 41 | Mindestdruckhalteventil | | |
| 43 | Steueranschluss | | |
| 45 | Anschlussleitung | | |
| 47 | Anschlagfeder | | |
| 49 | zweiter Steueranschluss | | |
| 51 | Versorgungsleitung | | |
| 53 | Drucksensor | | |
| 55 | Drucksensor | | |
| 57 | Rechnereinheit | | |
| 59 | Steuerleitung | | |

## Patentansprüche

1. Druckmittelversorgungssystem (1), insbesondere für ein Fahrwerkssystem, umfassend eine Pumpe (3) zur Versorgung eines Anschlusses (7) des Druckmittelversorgungssystems (1) für ein anschließbares Stellelement (9), wobei ausgehend von der Pumpe (3) funktional vor dem Anschluss (7) ein Mindestdruckhalteventil (41) mit einem Steueranschluss (43) für das anschließbare Stellelement angeordnet ist **dadurch gekennzeichnet, dass** das Mindestdruckhalteventil (41) einen zweiten Steueranschluss (49) an eine Pumpenauslassleitung (31) des Druckmittelversorgungssystems (1) aufweist.

2. Druckmittelversorgungssystem nach Anspruch 1, **dadurch gekennzeichnet, dass** der erste und der zweite Steueranschluss (43; 49) funktional miteinander verbunden sind.

3. Druckmittelversorgungssystem nach mindestens einem der Ansprüche 1 bis 2 **dadurch gekennzeichnet, dass** ein Druckmittelspeicher (27) als Bestandteil des Druckmittelversorgungssystem eine Druckvorspannung oberhalb des Atmosphärendrucks aufweist.

4. Druckmittelversorgungssystem nach mindestens einem der Ansprüche 1 bis 3, **dadurch gekennzeichnet, dass** die Pumpe (3) zwei Förderrichtungen aufweist.

5. Druckmittelversorgungssystem nach mindestens einem der Ansprüche 1 oder 4, **dadurch gekennzeichnet, dass** funktional zwischen dem Mindestdruckhalteventil (41) und der Pumpe (3) ein Schaltventil (39) angeordnet ist, wobei eine Versorgungsleitung (51) zwischen dem Schaltventil (39) und dem Druckmittelspeicher (27) funktional parallel zu der Pumpenauslassleitung (31) erläuft.

6. Druckmittelversorgungssystem nach Anspruch 5, **dadurch gekennzeichnet, dass** eine Saugleitung (25) der Pumpe (3) und die Versorgungsleitung (51) voneinander getrennt sind

7. Druckmittelversorgungssystem nach mindestens einem der Ansprüche 5 oder 6, **dadurch gekennzeichnet, dass** bei einer Förderung von Druckmittel aus dem Druckmittelspeicher (27) über die Pumpenauslassleitung (31) das Schaltventil (39) die Versorgungsleitung (51) sperrt.

8. Druckmittelversorgungssystem nach mindestens einem der Ansprüche 5 oder 6, **dadurch gekennzeichnet, dass** bei einer über das Schaltventil (39) eingestellten Verbindung über die Versorgungsleitung (51) zwischen dem Anschluss (7) und dem Druckmittelspeicher (27) die Pumpenauslassleitung (31) gesperrt ist.

9. Druckmittelversorgungssystem nach mindestens einem der Ansprüche 1 bis 8 , **dadurch gekennzeichnet, dass** an dem Anschluss (7) ein Stellelement (9) mit einem zum Druckmittelspeicher (27) separaten Speicher (17) angeschlossen ist, der für die Druckvorspannung einen Hüllkörper (19) mit einer eingeschlossenen Gasmasse aufweist.

## Claims

1. Pressure medium supply system (1), in particular for a suspension system, comprising a pump (3) for supplying a connection (7) of the pressure medium supply system (1) for a connectable control element (9), wherein, starting from the pump (3), a minimum-pressure-maintaining valve (41) having a control connection (43) for the connectable control element is arranged functionally upstream of the connection (7), **characterized in that** the minimum-pressure-maintaining valve (41) has a second control connection (49) to a pump outlet line (31) of the pressure medium supply system (1).

2. Pressure medium supply system according to Claim 1, **characterized in that** the first and second control connections (43; 49) are functionally connected to one another.

3. Pressure medium supply system according to at least one of Claims 1 to 2, **characterized in that** a pressure medium reservoir (27) as constituent part of the pressure medium supply system has a pressure preload above atmospheric pressure.

4. Pressure medium supply system according to at least one of Claims 1 to 3, **characterized in that** the pump (3) has two delivery directions.

5. Pressure medium supply system according to at least one of Claims 1 or 4, **characterized in that** a switching valve (39) is arranged functionally between the minimum-pressure-maintaining valve (41) and the pump (3), wherein a supply line (51) between the switching valve (39) and the pressure medium reservoir (27) extends functionally parallel to the pump outlet line (31).

6. Pressure medium supply system according to Claim 5, **characterized in that** an intake line (25) of the pump (3) and the supply line (51) are separated from one another.

7. Pressure medium supply system according to at least one of Claims 5 or 6, **characterized in that**, when pressure medium is delivered from the pressure medium reservoir (27) via the pump outlet line (31), the switching valve (39) shuts off the supply line (51).

8. Pressure medium supply system according to at least one of Claims 5 or 6, **characterized in that** the pump outlet line (31) is shut off when a link is established between the connection (7) and the pressure medium reservoir (27) via the supply line (51) by means of the switching valve (39).

9. Pressure medium supply system according to at least one of Claims 1 to 8, **characterized in that** the connection (7) is connected to a control element (9) having a reservoir (17) which is separate from the pressure medium reservoir (27) and has a casing body (19) with an enclosed gas mass for the pressure preload.

## Revendications

1. Système d'alimentation en fluide sous pression (1), notamment pour un système de châssis, comprenant une pompe (3) pour alimenter un raccord (7) du système d'alimentation en fluide sous pression (1) pour un élément de réglage raccordable (9), une soupape de maintien de pression minimale (41) avec un raccord de commande (43) pour l'élément de réglage raccordable étant agencée fonctionnellement avant le raccord (7) à partir de la pompe (3), **caractérisé en ce que** la soupape de maintien de pression minimale (41) présente un deuxième raccord de commande (49) au niveau d'une conduite de sortie de pompe (31) du système d'alimentation en fluide sous pression (1).

2. Système d'alimentation en fluide sous pression selon la revendication 1, **caractérisé en ce que** le premier et le deuxième raccord de commande (43 ; 49) sont reliés fonctionnellement entre eux.

3. Système d'alimentation en fluide sous pression selon au moins l'une quelconque des revendications 1 à 2, **caractérisé en ce qu'**un réservoir de fluide sous pression (27) en tant constituant du système d'alimentation en fluide sous pression présente une précontrainte de pression supérieure à la pression atmosphérique.

4. Système d'alimentation en fluide sous pression selon au moins l'une quelconque des revendications 1 à 3, **caractérisé en ce que** la pompe (3) présente deux directions de transport.

5. Système d'alimentation en fluide sous pression selon au moins l'une quelconque des revendications 1 ou 4, **caractérisé en ce qu'**une soupape de commutation (39) est agencée fonctionnellement entre la soupape de maintien de pression minimale (41) et la pompe (3), une conduite d'alimentation (51) entre la soupape de commutation (39) et le réservoir de fluide sous pression (27) s'étendant fonctionnellement en parallèle avec la conduite de sortie de pompe (31).

6. Système d'alimentation en fluide sous pression selon la revendication 5, **caractérisé en ce qu'**une conduite d'aspiration (25) de la pompe (3) et la conduite d'alimentation (51) sont séparées l'une de l'autre.

7. Système d'alimentation en fluide sous pression selon au moins l'une quelconque des revendications 5 ou 6, **caractérisé en ce que**, lors d'un transport de fluide sous pression depuis le réservoir de fluide sous pression (27) via la conduite de sortie de pompe (31), la soupape de commutation (39) bloque la conduite d'alimentation (51).

8. Système d'alimentation en fluide sous pression selon au moins l'une quelconque des revendications 5 ou 6, **caractérisé en ce que** la conduite de sortie de pompe (31) est bloquée lorsque la liaison via la conduite d'alimentation (51) entre le raccord (7) et le réservoir de fluide sous pression (27) est réglée via la soupape de commutation (39) .

9. Système d'alimentation en fluide sous pression selon au moins l'une quelconque des revendications 1 à 8, **caractérisé en ce qu'**un élément de réglage (9) est raccordé au raccord (7) avec un réservoir (17) séparé du réservoir de fluide sous pression (27), qui présente pour la précontrainte de pression un corps d'enveloppe (19) avec une masse de gaz enfermée.
